# EUROPEAN PATENT APPLICATION

(11) **EP 4 644 960 A1**
(43) Date of publication of application: **05.11.2025**
(21) Application number: 25174123.7
(22) Date of filing: 02.05.2025
(51) Int. Cl.: G02B 6/38

(54) **OPTICAL FIBER LOOPBACK ASSEMBLY**

(30) Priority: 03.05.2024 US 202463642609 P; 12.06.2024 US 202463658947 P
(71) Applicant: Corning Research & Development Corporation, Corning, New York 14831 (US)
(72) Inventor: HOUSER, Christopher Shawn, Hickory, 28602 (US); LEWIS, Jason Anthony, Hickory, 28602 (US); SHIRILLA, Daniel Charles, Hickory, 28601 (US)
(74) Representative: Reddie & Grose LLP

(57) **Abstract**

An optical fiber loopback assembly includes a fiber optic connector and a loopback shell coupled to a boot of the fiber optic connector. The fiber optic connector can be a known connector, thereby avoiding the need for specialized components or modifications. The loopback shell includes a portion behind the boot of the connector, but can have a compact design that is still configured to store excess length of loopback optical fibers.

## Description

### Priority Application

This application claims the benefit of priority of U.S. Provisional Application No. 63/658,947, filed on June 12, 2024, and U.S. Provisional Application No. 63/642,609, filed on May 3, 2024, both applications being incorporated herein by reference.

### Technical Field

This disclosure relates generally to optical connectivity, and more particularly to an optical fiber loopback assembly for testing optical links in a network.

### Background

Optical fibers are useful in a wide variety of applications, including the telecommunications industry for voice, video, and data transmissions. Benefits of optical fibers include wide bandwidth and low noise operation. Continued growth of the Internet has generated demand for data centers having larger numbers of computer systems and associated telecommunication and storage systems. These systems are often connected by one or more fiber optic cables that were installed well before the systems. If a fiber optic cable has excessive signal loss (e.g., due to unlatched or dirty connectors, a severely bent fiber, or any other reason) the systems connected by that fiber optic cable may not function properly. When a technician becomes aware of a problematic optical link, they must identify the fiber optic cable providing the link, track down each end of the fiber optic cable, and then test the fiber optic cable, e.g., using a power meter or installed hardware (e.g., switch) to determine if there is excessive signal loss.

In large data centers having thousands of fiber optic cables, finding and testing a fiber optic cable providing a defective link between network nodes can be time consuming. One way technicians may identify problematic links quickly is by using a loopback device that plugs into an adapter on a piece of network equipment. Loopback devices are configured to route optical signals from a transmit channel or port back to a receive channel or port. The optical signal patterns at the transmitter and the receiver can then be analyzed and compared to diagnose whether one or both of the signal paths (transmitter to loopback device, and loopback device to receiver) may contain a problematic optical link.

Although many different types of loopback devices exist, the loopback devices that function like plug-style connectors are specialty-purpose devices that typically involve either: (i) some modification to a fiber optic connector body, or (ii) an exposed length of cable extending between two fiber optic connectors. There remains a need in the industry for alternative types of loopback devices.

### Summary

The present disclosure provides an optical fiber loopback assembly. According to one embodiment, such a loopback assembly comprises at least one optical fiber, a fiber optic connector, and a loopback shell. The fiber optic connector includes at least one ferrule terminating the at least one optical fiber, a connector body in which the at least one ferrule is at least partially disposed, and a boot coupled to a rear portion of the connector body. The loopback shell includes a first portion coupled to the boot of the fiber optic connector and a second portion behind the boot. The loopback shell also includes an internal cavity defined at least in part within the second portion. The at least one optical fiber comprises at least one loopback optical fiber that: (i) has a first end terminated by the at least one ferrule of the fiber optic connector, (ii) extends through the connector body and the boot to enter the internal cavity of the loopback shell before extending back into the boot and the connector body, and (iii) has a second end terminated by the at least one ferrule of the fiber optic connector.

In some embodiments, the at least one ferrule consists of a single ferrule that terminates the at least one optical fiber. There may be a plurality of the optical fibers such that the ferrule is a multifiber ferrule (and, therefore, the fiber optic connector is a multifiber connector). In other embodiments, the at least one ferrule may comprise a first ferrule terminating the first end of the at least one loopback optical fiber and a second ferrule terminating the second end of the at least one loopback optical fiber. The fiber optic connector in such embodiments may therefore be a duplex connector.

In a further aspect of this disclosure, the loopback shell may include a first body member and a second body member coupled together, and the boot is disposed between the first body member and the second body member to be coupled to the first portion of the loopback shell. The first body member and the second body member may be removably coupled together, thereby allowing easy assembly to the fiber optic connector and, when needed, easy access to the at least one loopback optical fiber that extends through the boot and into the internal cavity of the loopback shell.

In some embodiments, the loopback assembly may further comprise a cable to which the fiber optic connector is secured. The cable includes a cable jacket through which the plurality of optical fibers extends, and the cable jacket terminates in the internal cavity of the loopback shell.

Advantageously, the loopback shell may have a compact design. In some embodiments, for example: (i) the at least one ferrule of the fiber optic connector positions respective end sections of at least two optical fibers in a common plane, (ii) the connector has a footprint with a maximum height H₁ in a direction parallel to or within the common plane, (iii) the loopback shell has a footprint with a maximum height H₂ in a direction parallel to or within the common plane, and (iv) the height H₂ is between about 1 to about 1.7 times the height H₁. These or other embodiments may have the at least one loopback optical fiber meeting bend performance specifications of International Telecommunication Union standard ITU-T G.657.A2 or ITU-T G.657.B2, or even ITU-T G.657.B3.

According to another embodiment, an optical loopback assembly comprises a plurality of optical fibers, a fiber optic connector, and a loopback shell. The fiber optic connector includes a ferrule terminating the plurality of optical fibers, a connector body in which the ferrule is at least partially retained, and a boot coupled to a rear portion of the connector body. The loopback shell has a first portion coupled to the boot of the fiber optic connector and a second portion behind the boot. The loopback shell also includes an internal cavity defined at least in part within the second portion. At least one optical fiber of the plurality of optical fibers is a loopback optical fiber that: (i) has a first end terminated by the ferrule of the fiber optic connector, (ii) extends through the connector body and the boot to enter the internal cavity of the loopback shell before extending back into the boot and the connector body, and (iii) has a second end terminated by the ferrule of the fiber optic connector.

Method of forming an optical fiber loopback assembly, such as those summarized above, are also disclosed. The optical fiber loopback assembly includes a fiber optic connector and a loopback shell. An example method of forming the optical fiber loopback assembly comprises: terminating at least one optical fiber with a ferrule, wherein the at least one optical fiber comprises at least one loopback optical fiber that has a first end terminated by the ferrule and a second end terminated by the ferrule; assembling the fiber optic connector, wherein the assembling includes at least partially disposing the ferrule in a connector body of the fiber optic connector and coupling a boot to a rear portion of the connector body; performing at least one termination processing step on the fiber optic connector after the assembling step, wherein the loopback shell is not installed on the fiber optic connector when the at least one termination processing step is performed; and installing the loopback shell onto the fiber optic connector after performing the at least one termination processing step. The step of installing the loopback sheel comprises coupling a first portion of the loopback shell to the boot of the fiber optic connector and storing excess length of the at least one optical fiber in an internal cavity defined at least in part in a second portion of the loopback shell that is behind the boot. As a result of the method, the at least one loopback optical fiber extends through the connector body and the boot to enter the internal cavity of the loopback shell before extending back into the boot and the connector body.

Additional features and advantages will be set out in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is perspective view of an optical fiber loopback assembly according to one embodiment of this disclosure.
Fig. 2 is a perspective view similar to Fig. 1, but with a first body member of a loopback shell omitted to show how a fiber optic connector of the loopback assembly may be received in a second body member of the loopback shell.
Fig. 3 is an exploded perspective view of the loopback assembly of Fig. 1 and illustrates how the first and second body members of the loopback shell are configured to couple to each other and to a rear portion of the fiber optic connector.
Fig. 4 is an exploded perspective view of the loopback shell from a different viewpoint.
Fig. 5 is top view of either the first body member or the second body member of the loopback shell.
Fig. 6 is an image showing how optical fibers can extend from the fiber optic connector into the loopback shell and be routed by the loopback shell back into the fiber optic connector.
Fig. 7 is a perspective view of a loopback assembly according to another embodiment of this disclosure.
Fig. 8 is an exploded perspective view of the loopback assembly of Fig. 7.
Fig. 9 is a side view of the loopback assembly of Fig. 7.
Fig. 10 is a perspective view of several loopback assemblies of Fig. 7 plugged into a multi-port adapter and ganged together using a common clip.
Fig. 11 is a perspective view of a different fiber optic connector that may be used as part of an optical fiber loopback assembly according to this disclosure.

### Detailed Description

Various embodiments will be further clarified by examples in the description below. In general, the description relates to an optical fiber loopback assembly ("loopback assembly") that can plug into network equipment and be used for testing optical links of the network. The loopback assembly may include an unmodified fiber optic connector, i.e., the type of connector that may be on standard cable assemblies or harnesses in the network. A loopback shell is constructed on a back end of the fiber optic connector and may be configured to store excess length of optical fibers ("slack") in a compact manner. The excess length may be beneficial to have for steps performed when the optical fibers are being terminated with the fiber optic connector, such as polishing and testing, but is advantageously contained and concealed in the final loopback assembly.

In general, the loopback assembly may be configured to receive one or more optical signals from an optical fiber at a port of the network equipment into which the loopback assembly is inserted, and redirect the received optical signal(s) for transmission into other optical fiber(s) at the port as one or more corresponding return signals. The loopback assembly may thereby provide a loopback to the device (e.g., transceiver) transmitting the optical signal(s) at an opposite end of an optical link in the network that includes the port. By comparing the power of the return optical signal(s) to the power of the transmitted optical signal(s), technicians may be able to identify attenuation issues in an optical link, such as issues that may be caused by the presence of debris or loose connections.

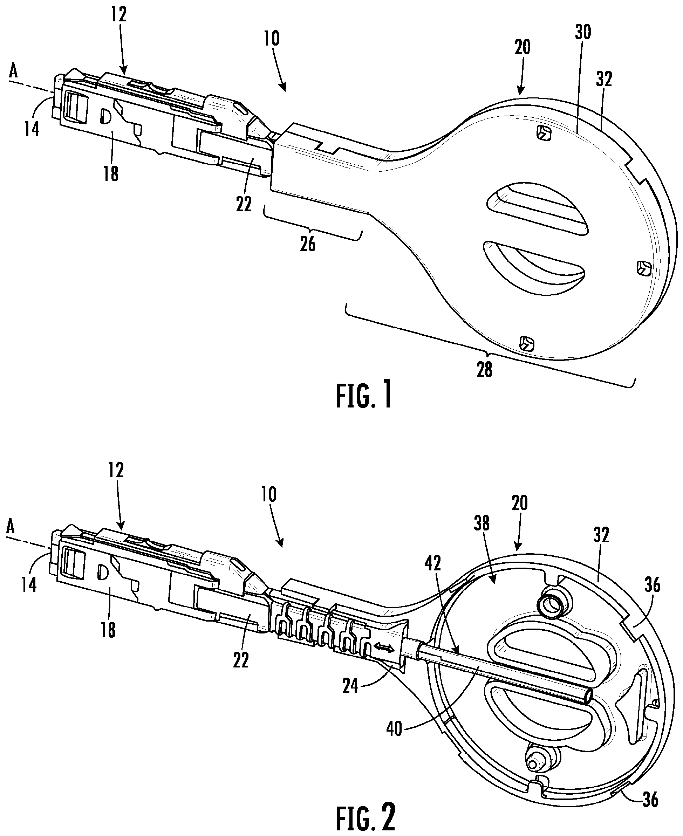

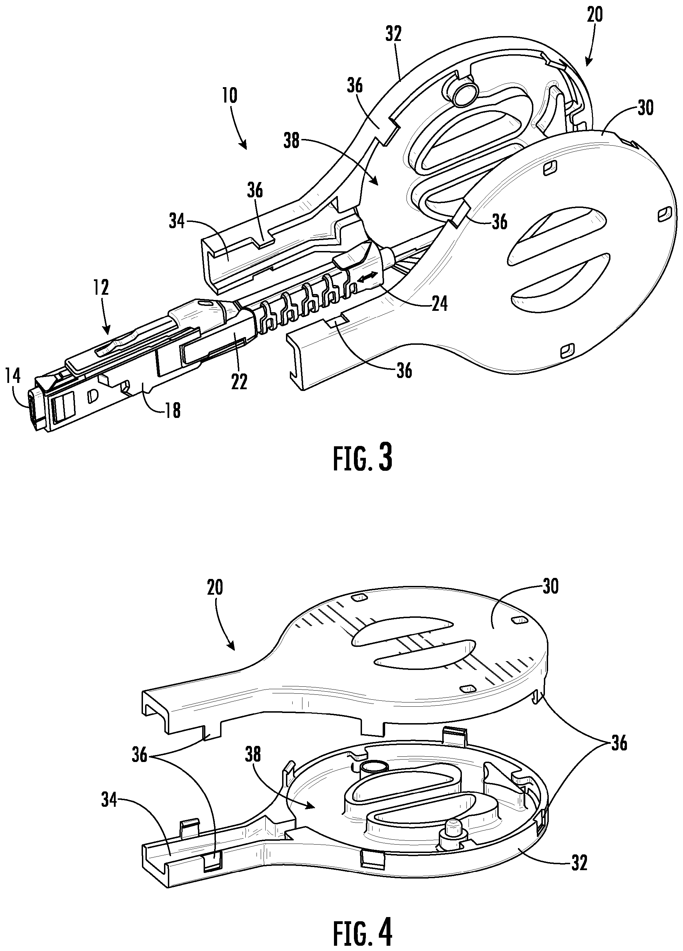

One example of a loopback assembly 10 according to this disclosure is illustrated in Figs. 1-3. The loopback assembly 10 includes a fiber optic connector 12 ("connector 12") and a loopback shell 20 coupled to the connector 12, which in the illustrated embodiment is a very small form factor (VSFF) multifiber optical connector. Specifically, the connector 12 is shown in the form of a MMC connector available from US Conec Ltd., but the present disclosure is not limited to such connectors. In alternative embodiments, for example, the connector 12 may be a different type of multifiber connector, such as an SN-MT connector commercially available from Senko Advanced Components, Inc. or an MPO connector according to TIA-604-5 and IEC 61754-7. Duplex connectors are also a possibility, as will be described in greater detail below.

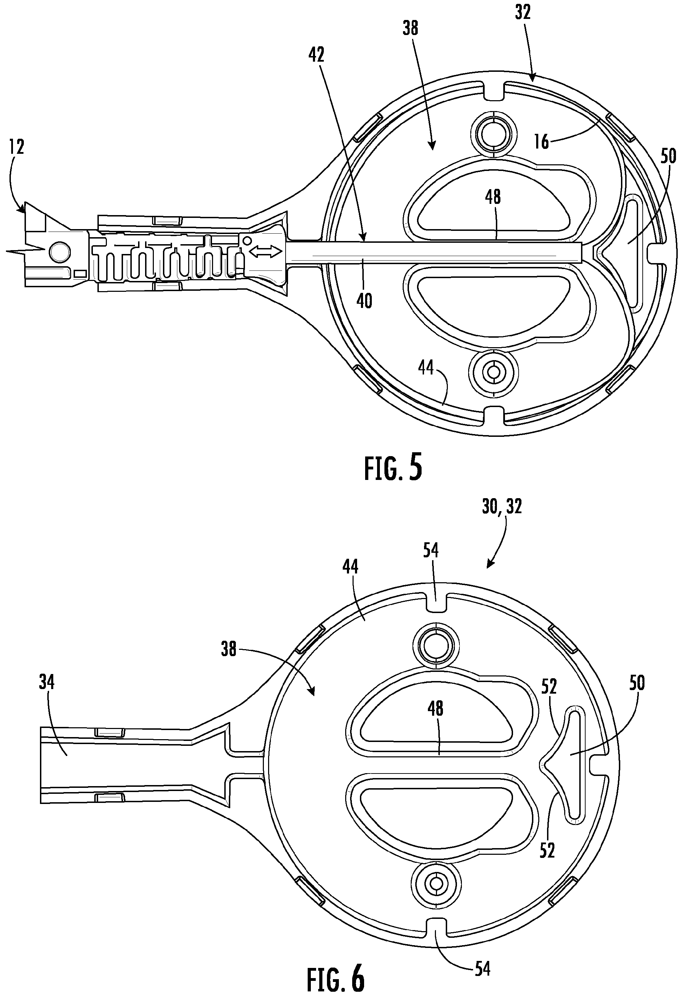

The connector 12 includes a ferrule 14 that terminates multiple optical fibers 16 (Fig. 5) and a connector body 18 in which the ferrule 14 is at least partially retained. As used in this disclosure, the term "connector body" is intended to generically refer to the structure of the connector 12 housing the ferrule 14 and to which a cable is normally attached such that the connector body 18 protects the terminated optical fibers 16 as they extend from the end of the cable to the ferrule 14. The connector body 18 may comprise multiple body components assembled together in some embodiments. The connector 12 also includes a boot 22 coupled to a rear portion of the connector body 18. The boot 22 may be formed from an elastomeric material and is designed to help limit bending of the optical fibers 16 exiting the rear portion of the connector body 18 and thereby provide strain relief, as is well-known.

The connector 12 generally extends along a longitudinal axis A, and the ferrule 14 is configured to position end portions of the optical fibers 16 along or parallel to that longitudinal axis A. In this disclosure, the terms "front" and "back" (or "rear") are relative terms that generally use the orientation of the connector 12 along the longitudinal axis A as a reference. For example, a front of the connector 12 is defined by the ferrule 14, and a rear of the connector 12 is defined where the boot 22 of the connector 12 stops extending over a cable 42. Furthermore, references to an "axial direction", "axially", or the like refer to along or parallel to the longitudinal axis A.

Now referring to Figs. 1-4, the loopback shell 20 also includes a first portion 26 coupled to the boot 22 and a second portion 28 behind the boot 22. In the embodiment shown, the loopback shell 20 is defined by a first body member 30 and a second body member 32 that are coupled together. The boot 22 is disposed between the first body member 30 and the second body member 32, which each include a recess 34 shaped to receive the boot 22. Indeed, the first body member 30 and the second body member 32 may be half-shells with the same design, and the design may be hermaphroditic to allow for the first body member 30 and second body member 32 to couple to each other.

The coupling between the first body member 30 and the second body member 32 may be a removable coupling. In other words, the first body member 30 and the second body member 32 may be removably coupled together. In the embodiment shown, the coupling is achieved by complementary locking features 36 engaging each other, which may provide a snap-fit like connection. Other forms of coupling may be used instead or in addition to the complementary locking features 36 in some embodiments, including adhesive and other coupling mechanisms intended to provide a permanent connection between the first body member 30 and the second body member 32.

The recess 34 that is shaped to receive the boot 22 may have a shape similar to the boot 22 to help minimize the size of the first portion 26. Additionally, in the embodiment shown, the boot 22 includes a flared end portion 24 that allows for an interference fit in the sense that pulling the connector 12 axially relative to the loopback shell 20 results in the flared end portion 24 of the boot 22 contacting structure inside the first portion 26 of the loopback shell 20. As a result, the relative axial movement is effectively prevented (or at least limited) due to the shape of the recess 34 and the flared end portion 24 of the boot 22.

The second portion 28 of the loopback shell 20 defines an internal cavity 38 of the loopback shell 20. The internal cavity 38 is entirely within the second portion 28 in the embodiment shown, but other embodiments are possible where the first portion 26 may also define part of the internal cavity 38. Fig. 2 illustrates how an end of the boot 22 faces the internal cavity 38, and how a short length of cable jacket 40 may extend from the boot 22 and into the internal cavity 38. The cable jacket 40 may be part of a short length of cable 42. For example, the cable 42 may also include strength elements (e.g., aramid yarn; not shown) that are secured to the connector body 18 using a crimp band (not shown) or in another known manner. The boot 22 resides over the interface between the cable 42 and the connector 12, as mentioned above.

As shown in Fig. 5, optical fibers 16 extend from the connector 12, through the cable jacket 40, and into the internal cavity 38 of the loopback shell 20. The optical fibers 16 have respective first ends terminated by the ferrule 14 (Figs. 1-3) of the connector 12. Within the loopback shell 20, the optical fibers 16 extend around a peripheral region 44 of the internal cavity 38 multiple times and then extend back into the boot 22 and the connector body 18. Respective second ends of the optical fibers 16 are also terminated by the ferrule 14 of the connector 12. Thus, the optical fibers 16 are loopback optical fibers with both ends thereof terminated by the ferrule 14. As a specific example, there may be twelve optical fibers 16 that each serve as loopback optical fibers such that the ferrule 14 terminates twenty-four optical fiber ends (two for each of the twelve optical fibers 16).

In alternative embodiments, there may be a different number of optical fibers 16. Furthermore, in some embodiments only some of the optical fibers 16 may serve as loopback optical fibers and therefore have each end thereof terminated by the ferrule 14.

Fig. 6 illustrates how the first body member 30 and the second body member 32 (each generically referred to as the body member 30, 32 in this paragraph) may include various routing features to assist with directing the optical fibers 16. In particular, the body member 30, 32 includes an axial guide 48 aligned with the longitudinal axis A (Figs. 1 and 2) of the connector 12 when the loopback shell 20 is coupled to the connector 12. The axial guide 48 is spaced from an entrance into the internal cavity 38 so that the peripheral region 44 crosses in front of the axial guide 48. The axial guide 48 can be used to direct the cable jacket 40 (or exposed optical fibers 16 if no cable jacket 40 is present) toward a back end of the loopback shell 20, and in the embodiment shown is formed by two opposing walls that extend parallel to each other. The body member 30, 32 also includes a wedge or directing member 50 between the axial guide 48 and the back end of the loopback shell 20. The directing member 50 includes curved surfaces 52 to direct the optical fibers 16 into the peripheral region 44 of the internal cavity 38. For example, and as illustrated in Fig. 5, the optical fibers 16 may be directed to the peripheral region 44 in a manner to extend clockwise or counterclockwise around the peripheral region 44. Different curved surfaces 52 are provided on the directing member 50 corresponding to the different directions. Whichever curved surface 52 is first used to direct the optical fibers 16 determines the direction in which the optical fibers 16 extend (clockwise or counterclockwise) around the peripheral region 44. To help route the optical fibers 16 back to the axial guide 48 so that the optical fibers 16 extend back into the boot 22 and the connector body 18, the opposite curved surface 52 is used.

As shown, the peripheral region 44 may define an unobstructed routing path for the optical fibers 16 due to the axial guide 48 being spaced from the entrance to the internal cavity 38 and the directing member 50 being spaced from the back end of the loopback shell 20. Additionally, tabs 54 may be provided at various locations around the internal cavity 38 to extend over the peripheral region 44 and help contain the optical fibers 16 routed therein.

In some embodiments, the loopback shell 20 may have a relatively small size or profile. For example, in some embodiments the optical fibers 16 may be optical fibers that meet (i.e., achieve or exceed) the bend performance specifications of International Telecommunication Union standard ITU-T G.657.A2 and/or ITU-T G.657.B2, such as Corning^{®} ClearCurve^{®} LBL optical fibers or Corning^{®} SMF-28^{®} Contour optical fibers. In some embodiments, the optical fibers 16 may even meet the bend performance of International Telecommunication Union standard ITU-T G.657.B3, using for example Corning^{®} ClearCurve^{®} ZBL optical fibers. By using such optical fibers, the internal cavity 38 of the loopback shell 20 can be designed to route the optical fibers 16 more compactly without causing excessive attenuation. In other words, curved surfaces inside the loopback shell 20 can have small radii of curvature due to the bend performance of the optical fibers 16, and as a result the loopback shell 20 can have a small footprint or profile.

In the embodiment shown, the first body member 30 and the second body member 32 of the loopback shell 20 are designed so that the peripheral region 44 of the internal cavity 38 has a substantially circular configuration. In alternative embodiments, however, the peripheral region 44 may have a different round configuration or even a non-round configuration. The latter embodiments may include additional routing features on the first body member 30 and/or the second body member 32 to still route the optical fibers 16 in a manner that does not result in sharp bends.

As referenced at the beginning of this Detailed Description, the loopback assembly 10 may include the connector 12 as an unmodified fiber optic connector. No special connector body components or boot are required, and instead the loopback shell 20 is simply coupled to a known connector design used for regular cable assemblies. This may help with termination processes, especially in light of the ability of the loopback shell 20 to accommodate and store excess length (slack) of the optical fibers 16. For example, the optical fibers 16 may be terminated in a conventional manner using the same equipment as "normal" terminations for cable assemblies. The loopback shell 20 need not be assembled at this point and, therefore, does not interfere with any termination equipment. Additionally, having excess length of optical fiber 16 extending behind the connector 12 may be necessary for some termination steps, such as polish, cleaning, inspecting, and/or testing steps, based on the equipment used.

Thus, a method of forming the loopback assembly may include terminating the optical fibers 16 with the connector 12 before installing the loopback shell 20. Specifically, the optical fibers 16 may be terminated with the ferrule 14, either before or after assembling the connector 12. Assembling the connector 12 includes positioning the ferrule 12 in the connector body 18 and coupling the boot 22 to the rear portion of the connector body 18. Before installing the loopback shell 20 but after terminating the optical fibers 16 with the ferrule 16, at least one other connector termination processing step is performed. For example, and as mentioned in the preceding paragraph, the ferrule 14 may be polished and/or the connector 12 may be inspected or tested. Sufficient length of the optical fibers 16 is provided behind the connector 12 to allow normal fixtures, equipment, processes, etc. to be used for such step(s).

Once the desired processing step(s) is/are performed, the loopback shell 20 may be installed onto the connector 12. For the embodiment in Figs. 1-6, the installation may begin with the first body member 30 being assembled with the connector 12. As shown in Figs. 1 and 5 and as discussed above, this assembly includes receiving the boot 22 in the recess 34 of the first portion 26 of the first body member 30 and accommodating the excess length of the optical fibers 16 in the internal cavity 38 by routing the optical fibers 16 around the peripheral region 44. The second body member 32 may then be coupled to first body member 30 complete the assembly of the loopback shell 20.

In alternative embodiments, the loopback shell 20 may have a different construction with more or less body components. Thus, installation of the loopback shell 20 onto the connector 12 may involve different steps depending on the construction of the loopback shell 20. In general, however, the installation involves coupling the first portion of the loopback shell 20 to the boot 22 and storing excess length of the optical fibers 16 in the internal cavity 38 that is defined at least in part in the second portion of the loopback shell 20.

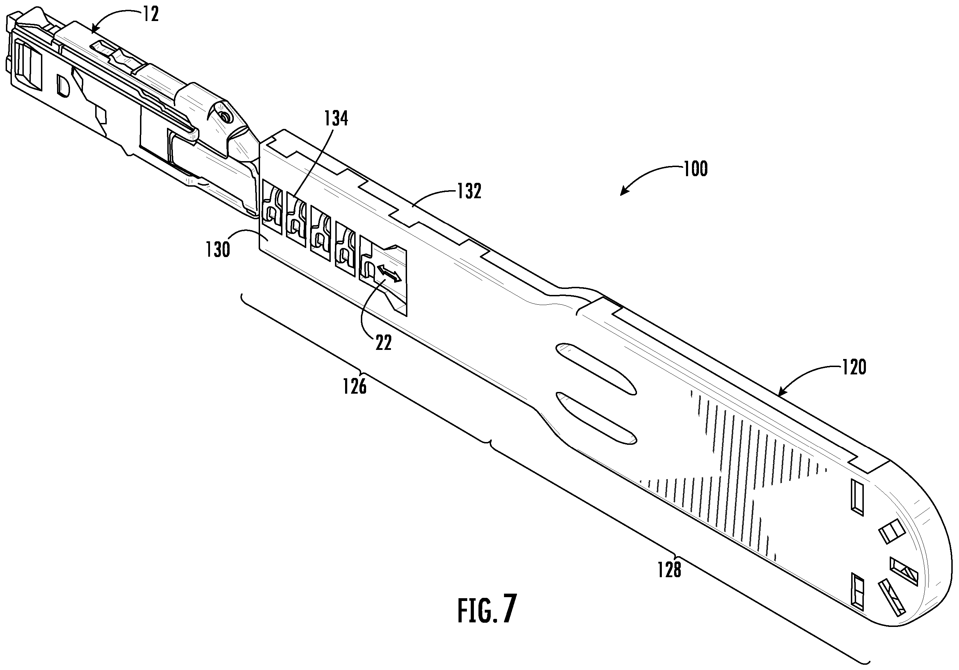

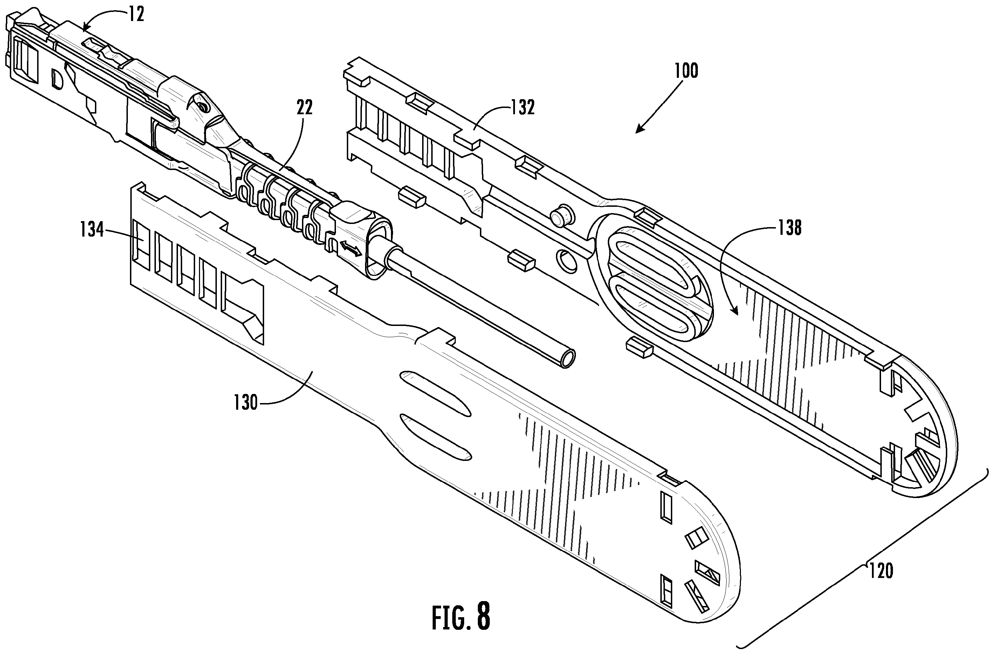

Figs. 7-9 illustrate one example of a loopback assembly 100 according to another embodiment. The loopback assembly 100 includes a loopback shell 120 that has a different shape/configuration than the loopback shell 20 (Figs. 1-6), but operates in a similar manner. In other words, the general principles discussed above for the loopback shell 20 may also apply to the loopback shell 120. This includes, for example: (a) the loopback shell 120 comprising a first portion 126 coupled to the boot 22 and a second portion 128 behind the boot 22; (b) the loopback shell 120 being defined by two half-shells (a first body member 130 and a second body member 132) of the same design; and (c) the second portion 128 having an internal cavity 138 configured to receive and route optical fibers in a manner similar to that discussed above for the loopback shell 20.

The loopback shell 120 also couples to the connector 12 in a manner similar to the loopback shell 20. However, as shown in Fig. 7-9, the first and second body members 130, 132 may be designed to provide windows 134 in the first portion 126. The windows 134 may not only reduce the material required for the loopback shell 20, but also allow for a more compact or "thin" design since portions of the boot 22 can extend into the windows 134.

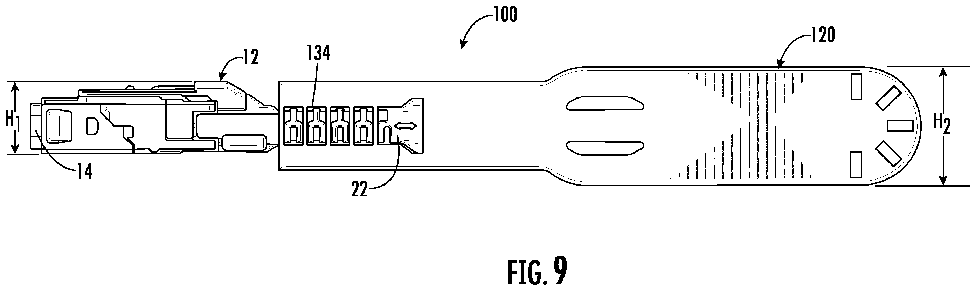

Indeed, the loopback shell 120 may be both thinner and have a lower vertical profile than the loopback shell 20. Fig. 9, for example, illustrates how the connector 12 may have a footprint with a maximum height H₁ in a vertical direction. The vertical direction in this embodiment is within or parallel to a plane in which end sections of optical fibers 16 reside (e.g., in the ferrule 14). The loopback shell 120, on the other hand, is configured to have a footprint with a maximum height H₂ in the vertical direction. The height H₂ is only slightly greater than the height H₁ to help provide a compact design. In some embodiments, the height H₂ may be less than about 75% larger than the height H₁, or even less than about 70% larger than the height H₁. The height H₂ may be, for example, between about 1 to about 1.7 times the height H₁. Such a small footprint in the vertical direction may help allow the loopback assembly 100 to be used in dense environments that require connectors 20 to be positioned close together. For example, if the connector 12 plugs into an adapter (not shown) in a given row adapters in a patch panel or the like, other rows of adapters and connectors may be positioned above and/or below the given row of adapters. By having a compact profile in the vertical direction, the loopback shell 120 may avoid interfering with other connectors (or other loopback assemblies 100) being plugged into the other row(s).

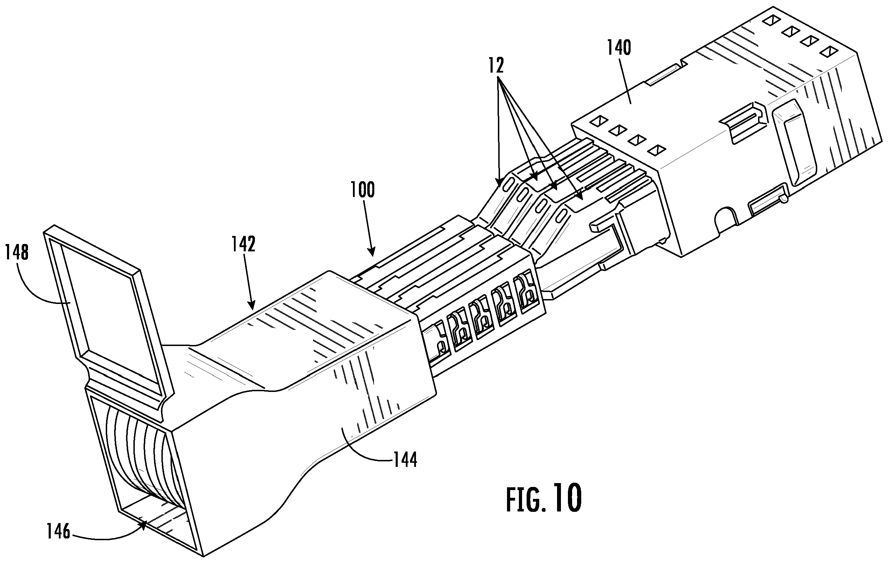

Similarly, the thin profile in a width direction that is perpendicular to the vertical direction may avoid the loopback shell 120 interfering with adjacent connector(s) in the same row. Several connectors 12 may be closely positioned next to each other, such as when multiple connectors 12 are intended to be plugged into a multi-port adapter 140, as illustrated in Fig. 10. In some embodiments, the loopback shell 120 may have a footprint with a maximum width that is within 5% of the maximum width of the footprint of the connector 12, or even within 2% of the maximum width of the footprint of the connector 12. This may allow for multiple loopback assemblies 100 (only one being labeled in Fig. 10) to still be used with a multi-port adapter (e.g., adapter 140). The multiple loopback assemblies 100 may even be ganged together using a clip 142, an example of which is shown in Fig. 10. The clip 142 includes a main body 144 having a passage 146 extending therethrough. The passage 146 is shaped so that the loopback assemblies 100 can each be inserted through a rear end of the passage 146 and advanced until the first portions 126 of their respective loopback shells 120 extend through or beyond a front end of the passage 146. In some embodiments, the clip 142 may further include a door 148 pivotally coupled to the main body 144 for covering the rear end of the passage 146.

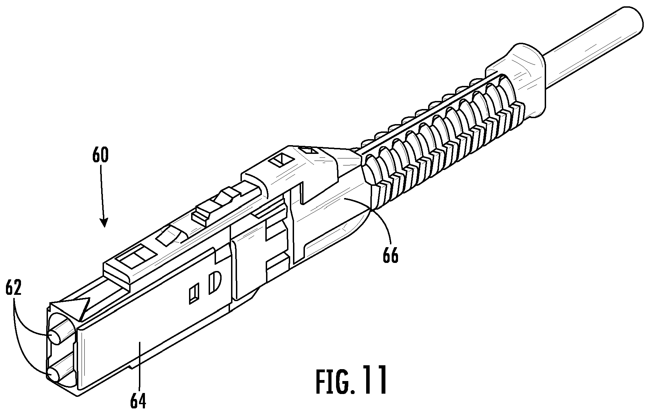

Many other variations will be appreciated by persons skilled in optical connectivity. For example, the present disclosure may apply to loopback assemblies involving different types of fiber optic connectors, such as duplex connectors. There may be only one optical fiber in such loopback assemblies, with the optical fiber having its two ends terminated by two respective ferrules. Fig. 11, for example, illustrates a duplex connector 60 that includes two ferrules 62. The connector 60 is shown in the form of an MDC connector commercially available from US Conec Ltd. The connector 62 includes a connector body 64 and boot 66 that are somewhat similar to the connector body 18 (Fig. 1) and boot 22. The loopback shell 20 (Figs. 1-6) may be configured to be used with the connector 62 or other forms of duplex connectors, such as SN connectors commercially available from Senko Advanced Components, Inc. and duplex LC connectors (e.g., according to IEC standard 61754-20:2012 and/or TIA 607-10-C).

Thus, the present disclosure in its broader aspects is not limited to the specific details and illustrative examples shown and described. Departures may be made from such details without departing from the scope of the present disclosure.

## Claims

1. An optical fiber loopback assembly, comprising:
at least one optical fiber;
a fiber optic connector that includes at least one ferrule terminating the at least one optical fiber, a connector body in which the at least one ferrule is at least partially disposed, and a boot coupled to a rear portion of the connector body; and
a loopback shell having a first portion coupled to the boot of the fiber optic connector and a second portion behind the boot, the loopback shell further including an internal cavity defined at least in part within the second portion;
wherein the at least one optical fiber comprises at least one loopback optical fiber that:
has a first end terminated by the at least one ferrule of the fiber optic connector,
extends through the connector body and the boot to enter the internal cavity of the loopback shell before extending back into the boot and the connector body, and
has a second end terminated by the at least one ferrule of the fiber optic connector.

2. The optical fiber loopback assembly of claim 1, wherein the at least one ferrule consists of a ferrule that terminates the at least one optical fiber, and wherein the at least one optical fiber comprises a plurality of optical fibers that are terminated by the ferrule of the fiber optic connector.

3. The optical fiber loopback assembly of claim 1, wherein the at least one ferrule comprises a first ferrule terminating the first end of the at least one loopback optical fiber and a second ferrule terminating the second end of the at least one loopback optical fiber, and wherein the at least one loopback optical fiber consists of a single loopback optical fiber.

4. The optical fiber loopback assembly of any of claims 1-3, wherein the loopback shell includes a first body member and a second body member coupled together, and wherein the boot is disposed between the first body member and the second body member to be coupled to the first portion of the loopback shell.

5. The optical fiber loopback assembly of any of claims 1-4, further comprising:
a cable to which the fiber optic connector is secured, wherein the cable includes a cable jacket through which the plurality of optical fibers extends, and wherein the cable jacket terminates in the internal cavity of the loopback shell.

6. The optical fiber loopback assembly of any of claims 1-5, wherein the internal cavity of the loopback shell includes a peripheral region around which the at least one loopback optical fiber extends multiple times before extending back into the boot and the connector body.

7. The optical fiber loopback assembly of claim 6, wherein the loopback shell further includes an axial guide spaced from an entrance into the internal cavity, and wherein the at least one loopback optical fiber extends through the axial guide toward a back end of the loopback shell before extending around the peripheral region.

8. The optical fiber loopback assembly of claim 7, wherein the loopback shell further includes a directing member within the internal cavity between the axial guide and the back end of the loopback shell, and wherein the directing member includes curved surfaces each configured to direct the at least one loopback optical fiber: (i) from within the axial guide to the peripheral region; or (ii) from the peripheral region to within the axial guide.

9. The optical fiber loopback assembly of any of claims 1-8, wherein:
the at least one optical fiber comprises at least two optical fibers,
the at least one ferrule of the fiber optic connector positions respective end sections of the at least two optical fibers in a common plane,
the connector has a footprint with a maximum height H₁ in a direction parallel to or within the common plane,
the loopback shell has a footprint with a maximum height H₂ in a direction parallel to or within the common plane, and
the height H₂ is between about 1 to about 1.7 times the height H₁.

10. The optical fiber loopback assembly of any of claims 1-9, wherein the at least one loopback optical fiber meets bend performance specifications of International Telecommunication Union standard ITU-T G.657.A2 or ITU-T G.657.B2.

11. The optical fiber loopback assembly of any of claims 1-9, wherein the at least one loopback optical fiber meets bend performance specifications of International Telecommunication Union standard ITU-T G.657.B3.

12. The optical fiber loopback assembly of any of claims 1-11, wherein the boot of the fiber optic connector includes a flared end portion that is retained in the first portion of the loopback shell by an interference fit between the boot and the loopback shell.

13. A method of forming an optical fiber loopback assembly according to any of claims 1-12, the method comprising:
terminating the at least one optical fiber with the ferrule;
assembling the fiber optic connector, wherein the assembling includes at least partially disposing the ferrule in the connector body of the fiber optic connector and coupling the boot to the rear portion of the connector body;
performing at least one termination processing step on the fiber optic connector after the assembling step, wherein the loopback shell is not installed on the fiber optic connector when the at least one termination processing step is performed; and
installing the loopback shell onto the fiber optic connector after performing the at least one termination processing step, wherein the installing comprises:
coupling the first portion of the loopback shell to the boot of the fiber optic connector; and
storing excess length of the at least one optical fiber in the internal cavity of the loopback shell.

14. The method of claim 13, wherein the at least one termination processing step comprises any one or more of the following:
polishing the ferrule,
cleaning the fiber optic connector,
inspecting the fiber optic connector, or
testing the fiber optic connector.

15. The method of claim 13 or 14, wherein the loopback shell includes a first body member and a second body member, and wherein the installing the loopback shell further comprises:
coupling the first body member and the second body member together, wherein the boot is disposed between the first body member and the second body member to be coupled to the first portion of the loopback shell.
